(19) Europäisches Patentamt

European Patent Office

Office européen des brevets

(11) **EP 0 575 257 B1**

(12) **EUROPEAN PATENT SPECIFICATION**

(45) Date of publication and mention
of the grant of the patent:
**18.08.1999 Bulletin 1999/33**

(51) Int Cl.6: **G02B 27/00**, G02B 7/12

(21) Application number: **93401562.9**

(22) Date of filing: **17.06.1993**

(54) **Spectacle type display apparatus**

Brillenartige Anzeigeapparat

Appareil d'affichage du type lunettes

(84) Designated Contracting States:
**DE FR GB**

(30) Priority: **22.06.1992 JP 16296992**
**17.06.1992 JP 15826292**

(43) Date of publication of application:
**22.12.1993 Bulletin 1993/51**

(73) Proprietor: **SONY CORPORATION**
**Tokyo (JP)**

(72) Inventors:
• **Hara, Nobuyuki, c/o Sony Corporation**
**Shinagawa-ku, Tokyo (JP)**
• **Kawamura, Akira, c/o Sony Corporation**
**Shinagawa-ku, Tokyo (JP)**
• **Matsui, Takeshi, c/o Sony Corporation**
**Shinagawa-ku, Tokyo (JP)**

(74) Representative: **Thévenet, Jean-Bruno et al**
**Cabinet Beau de Loménie**
**158, rue de l'Université**
**75340 Paris Cédex 07 (FR)**

(56) References cited:
**EP-A- 0 344 881     EP-A- 0 438 362**
**EP-A- 0 454 443     DE-U- 8 514 538**
**FR-A- 293 459       FR-A- 2 356 970**
**FR-A- 2 615 633     GB-A- 1 581 926**
**GB-A- 2 206 421     US-A- 4 636 866**
**US-A- 5 034 809**

• **IEEE SPECTRUM, vol.6, no.9, September 1969**
**pages 37 - 43 ERIC G. RAWSON 'Vibrating**
**varifocal mirrors for 3-D imaging'**

**Description**

BACKGROUND OF THE INVENTION

FIELD OF THE INVENTION

This invention relates to a spectacle type display apparatus, which displays a picture formed by computer graphics or the like, so that the user experiences a realization (the so-called virtual reality), as if existing in virtual region in a virtual image. The spectacles type display apparatus which is also termed head mounted display etc., has right and left display portions displaying left and right pictures respectively, so that the user sees through left and right lens systems a virtual image synthesized with pictures of these left and right display portions.

DESCRIPTION OF THE RELATED ART

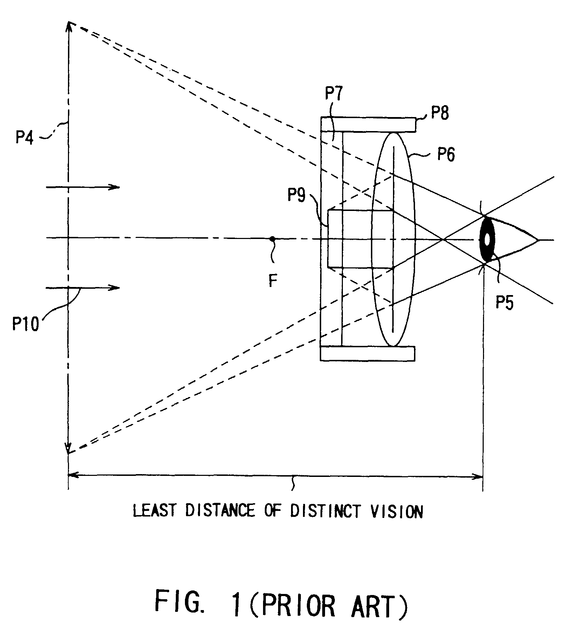

In recent years, a stereoscopic (or three-dimensional effect) television using a lens and a liquid crystal panel or the like has been proposed (see United States Patent Number 4,636,866 (Japanese Patent Laid-Open Gazette No. 117889/1984)). A fundamental principle of such previously-proposed liquid crystal stereoscopic television will be described with reference to Fig. 1.

Referring to Fig. 1, there is shown a convex lens P6 which is composed of a plurality of lenses in actual practice, and a light-transmission-type liquid crystal display P7 is supported in front of the convex lens P6 by a supporting device P8 together with the convex lens P6 to thereby display a video image on a display screen P9 of the liquid crystal display P7. The liquid crystal display P7 is disposed within a focal length F of the convex lens P6. Also, an eye P5 is distant from the convex lens P6 by a distance of 10 to 30 [mm] in the opposite side of the transmission-type liquid crystal display P7.

With the above arrangement, the transmission-type liquid crystal display P7 is disposed within the focal length F of the convex lens P6 so that, when the viewer peeps a video image on the display screen P9 of the transmission-type liquid crystal display P7 from the eye P5 side through the convex lens P6 by an illuminated natural light or guided light P10, the viewer can watch a virtual image P4 in the enlarged form at the position distant from the actual position in which the video image is displayed on the display screen P9.

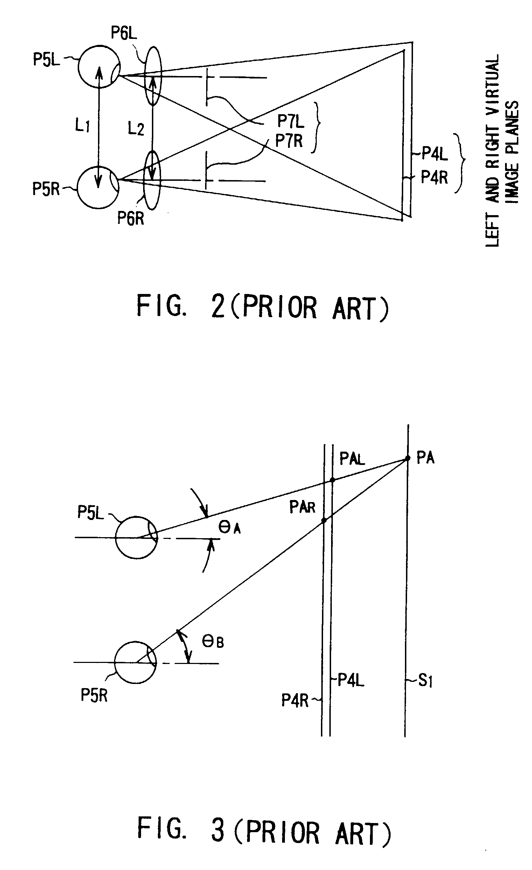

Fig. 2 is a plan view of the optical system of Fig. 1. As shown in Fig. 2, left and right convex lenses P6L and P6R for magnification are respectively disposed between left and right eyes P5L, P5R and left and right transmission-type liquid crystal displays P7L, P7R, whereby video images displayed on the left and right transmission-type liquid crystal displays P7L, P7R are magnified and also stereoscopic virtual images are displayed on left and right virtual image planes P4L, P4R, respectively.

In the conventional virtual image display device of lens magnification type shown in Figs. 1 and 2, the left and right convex lenses P6L, P6R are located very close to the left and right eyes P5L, P5R. Thereby, when the viewer wears the virtual image display of this arrangement, the viewer cannot see the view of the surroundings without taking off such virtual image display device, which is very dangerous.

Further, there is a conflict between inclinations (congestion angles) of the left and right eyes P5L, P5R and the focusing adjustment of crystalline lenses thereof. More specifically, video images on the left and right virtual image planes P4L, P4R viewed by the left and right eyes P5L, P5R shown in Fig. 2 must coincide with each other. However, the distance L1 between the human left and right eyes P5L and P5R is not always the same so that a length L2 between the left and right convex lenses P6L and P6R must be moved or adjusted. If the length L2 is changed, the positions of video images displayed on the left and right virtual image planes P4L, P4R will be displaced. Fig. 3 is a schematic diagram used to explain an example such that the video images displayed on the left and right virtual image planes P4L, P4R are displaced in position. In Fig. 3, the virtual image plane P4L is for the left eye and the virtual image plane P4R is for the right eye, and a predetermined point PAL on the virtual image plane P4L viewed by the left eye P5L and a predetermined point PAR on the virtual image plane P4R viewed by the right eye P5R should have been displayed at the same position, inherently.

When the viewer watches such an object by this virtual display, inclinations of left and right eyes become A and B, which means that the viewer watches a hypothetical point PA on a plane S1. On the other hand, the left and right eyes P5L, P5R are focused on the points PAR, PAL on the virtual image planes P4R, P4L so that the focused states of crystalline lenses and the inclination angles of both eyes are not coincident, thereby viewer's eyes being fatigued.

In the spectacle type display apparatus of such a construction, since the user sees through the left and right lens systems, there is a problem of an incongruence of visibility between the lens systems and the user's eyes. For solving the incongruence of visibility, a visibility adjusting means has provided in the spectacles type display apparatus.

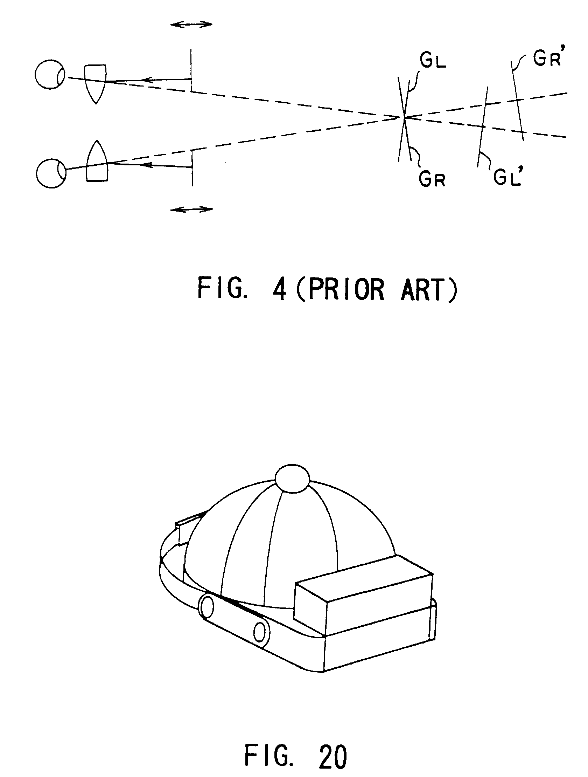

This adjustment of visibility is ordinarily performed to bring near to or to keep apart from left and right display portions with respect to the left and right lens systems. In this case, the left and right display portions are provided on a single moving member to move together. Therefore, when adjusting a visibility, positions of a virtual images GL, GR are moved as shown in Fig. 4, whereupon the positions of the virtual images GL and GR cease to coincide with each other.

In actual practice, even if the positions of the virtual images do not coincide, the user's eyes can view them with correction reaction so that these coincide each other. However, continuation of view with correction reaction for a long time, causes remarkable tension and its attendant ophthalmic fatigue or the like to the user. There is thus a problem the user is liable to suffer from amblyopia and a headache, which becomes a heavy burden to the user.

Generally, spaces between left and right eyeballs of users, i.e., a distance between pupils, are different normally about 56 to 76 [mm]. In the spectacle type display apparatus, a distance between the left and right lens systems must be adjusted corresponding to various distances between pupils, these being different among users. In this manner, when adjusting the distance between lenses, if the adjusted distance between lenses, i.e. distances between pupils, can be easily checked from the outside without using a distance measuring instrument, such as a slide caliper and a ruler etc., its usefulness is to be further improved.

Similarly, if a virtual image display position which is adjusted for the distances between left and right display portions and lenses, can be easily checked from the outside, its usefulness need to be further improved so as to realize a convenient spectacle type display apparatus in general.

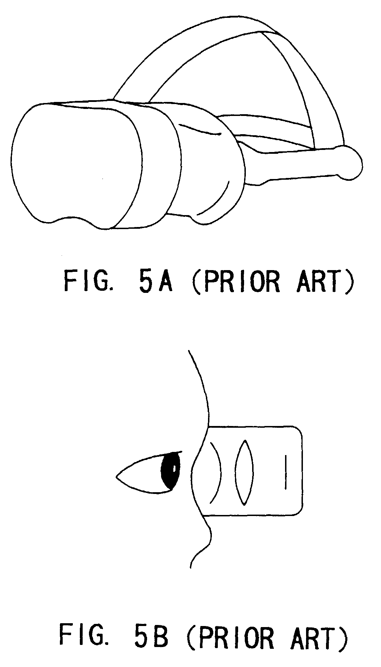

Further, in the spectacle type display apparatus used for virtual reality, the so-called goggle type construction as shown in Fig. 5A is ordinarily used. In this case, as shown in Fig. 5B, a space for inserting a pair of glasses within the goggle is provided, to allow for the user wearing glasses for correcting eyesight. However, in this case, when exchanging the glasses, the user must take off the spectacle type display apparatus of goggle type construction every time, which is very troublesome.

Further, in the spectacle type display apparatus of goggle type construction, because visual fields of the outside of the display portion is obstructed by a case, it is difficult and dangerous for example, to walk with the spectacle type display apparatus. Further, the user cannot see other displays while working. Accordingly, if the user wants to see the other displays, the user must remove his own, and there thus arises a problem in that work efficiency is lowered.

EP-A-0 438 362 discloses a display apparatus in which a single light source is used to illuminate two separate transparent LCD displays, in order to project an image onto the retina. The eyepieces of the apparatus are adjustable.

SUMMARY OF THE INVENTION

In view of the foregoing, an object of this invention is to provide a spectacle type display apparatus in which positions of left and right virtual images to be seen are coincided so as to improve the user's convenience in particular, even when adjusting a visibility and distance between pupils.

The foregoing object and other objects of the invention have been achieved by the provision of a glasses type display apparatus for seeing virtual images obtained through left and right lens systems which are respectively provided corresponding to left and right display portions, said glasses type display apparatus comprising left and right slide mechanisms for moving said left and right display portions respectively, characterised in that said left and right display portions are moved by said left and right slide mechanisms along segment lines containing respectively center points of said left and right lens systems located on a main point axis of said left and right lens systems and focus points of said left and right lens systems and in that said slide mechanism are operative to adjust the distance between on the one hand the left and the right display portion and on the other hand the left and right lens systems and to provide visibility adjustment, such that the positions of said left and right virtual images to be seen coincide with each other.

According to an embodiment, the invention proposes a glasses type display apparatus for seeing a virtual image obtained through left and right lens systems which are respectively provided corresponding to left and right display portions, said glasses type display apparatus comprising a moving mechanism for moving symmetrically said left and right lens systems corresponding to a distance between eyeballs; characterised in that it further comprises left and right slide mechanisms for sliding said left and right display portions respectively along segment lines containing center points of the left and right lens systems located on a main point axis of said left and right lens systems and focus points of said left and right lens systems; and a link mechanism linked to said moving mechanism of said left and right lens systems for opening or closing symmetrically so that said left and right slide mechanisms respectively keep a relationship along said segment lines, wherein the left and the right display portions are respectively attached to said left and right slide mechanisms to be moved on said segment lines, so that said positions of virtual images to be seen are coincided with each other, regardless of said distance between eyeballs, even when the distance between said left and right display portions and said left and right lens systems is changed with visibility control.

Other advantageous features and specific embodiments of the present invention are mentioned in the claims.

BRIEF DESCRIPTION OF THE DRAWINGS

In the accompanying drawings:

Fig. 1 is a schematic diagram used to explain a fundamental principle of a conventional liquid crystal stereoscopic viewing device;
Fig. 2 is a plan view of the conventional liquid crystal stereoscopic viewing device;
Fig. 3 is a schematic diagram used to explain a displacement of let and right virtual planes;
fig. 4 is a schematic diagram explaining a movement of the virtual image with visibility adjustment in a conventional glasses type display apparatus;
Figs. 5A and 5B are schematic diagrams explaining a conventional glasses type display apparatus;
Fig. 6 is a perspective view showing an exterior of the first embodiment of the glasses type display apparatus according to this invention;
Fig. 7 is a perspective view explaining the optical system of the glasses type display apparatus;
Fig. 8 is a perspective view explaining an arrangement of mechanisms of the glasses type display apparatus;
Fig. 9 is a perspective view explaining an exterior of the mechanism portion of the glasses type display apparatus;
Fig. 10 is a schematic diagram explaining an optical system of visibility adjustment in the glasses type display apparatus;
Fig. 11 is a schematic perspective view illustrating a configuration for indicating a distance between pupils in the glasses type display apparatus;
Fig. 12 is a plane view illustrating a configuration for indicating a distance between pupils in the glasses type display apparatus;
Fig. 13 is a rear view illustrating a mechanism for indicating a distance between pupils in the glasses type display apparatus;
Fig. 14 is a schematic perspective view illustrating a configuration for indicating a virtual image display position in the glasses type display apparatus;
Figs. 15A and 15B are side views illustrating a configuration for indicating a virtual image display position in the glasses type display apparatus;
Fig. 16 is a schematic perspective view showing an exterior of the head fitting member of the glasses type display apparatus;
Figs. 17A to 17C are schematic views explaining motions of the head fitting member of the glasses type display apparatus;
Fig. 18 is a cross-sectional view illustrating a configuration of the head fitting member of the glasses type display apparatus;
Fig. 19 is a disassembled perspective view showing a configuration of the head fitting member of the glasses type display apparatus;
Fig. 20 is a schematic perspective view showing a head fitting member of the other embodiment;
Fig. 21 is a schematic perspective view showing a configuration of the second embodiment of the glasses type display apparatus of this invention;
Fig. 22 is an optical distribution diagram explaining an optical system for visibility adjustment in the glasses type display apparatus of Fig. 21;
Fig. 23 is a schematic diagram showing a state where the user wears the glasses type display apparatus of Fig. 21;
Fig. 24 is a schematic perspective view showing a configuration of the third embodiment of the glasses type display apparatus of this invention;
Figs. 25A and 25B are optical system diagrams explaining a virtual image display area in the glasses type display apparatus of Fig. 24;
Figs. 26A and 26B are optical system diagrams explaining a virtual image display area in the glasses type display apparatus of Fig. 21; and
Figs. 27A and 27B are optical distribution diagrams explaining a virtual image display area in the glasses type display apparatus of the other embodiment.

DETAILED DESCRIPTION OF THE EMBODIMENT

A preferred embodiment of this invention will be described with reference to the accompanying drawings:

(1) First Embodiment

(1-1) Configuration of Glasses Type Display Apparatus

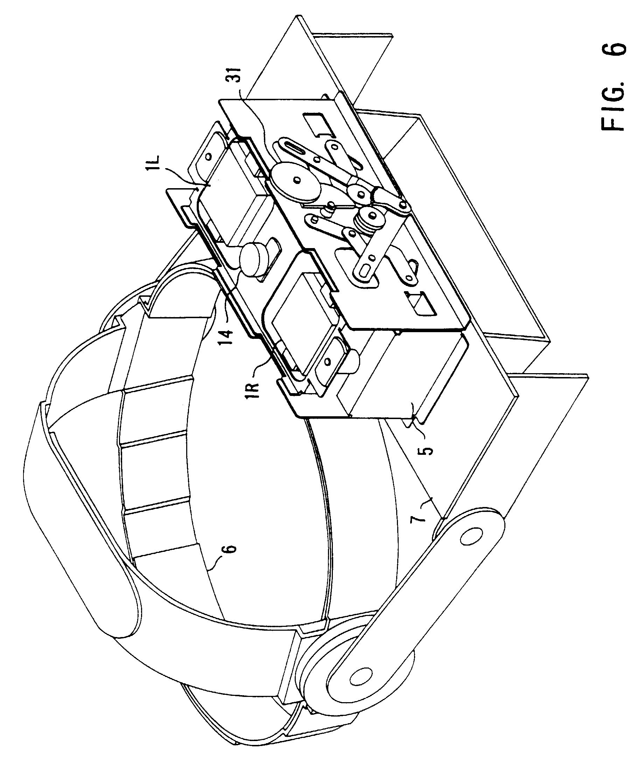

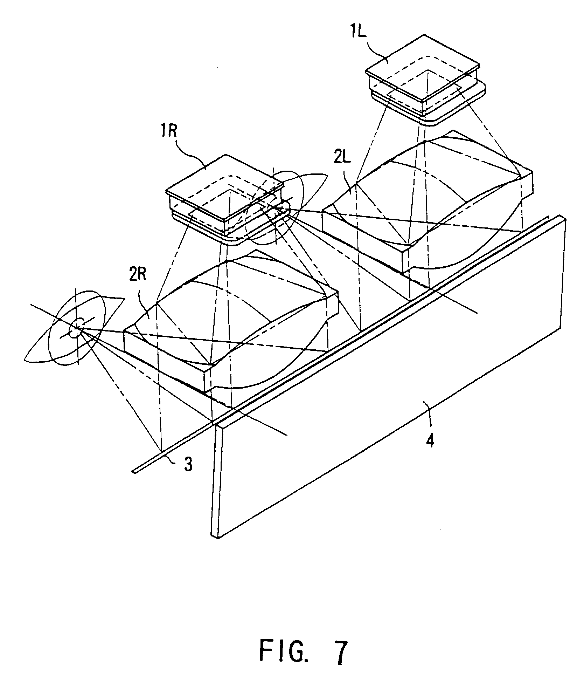

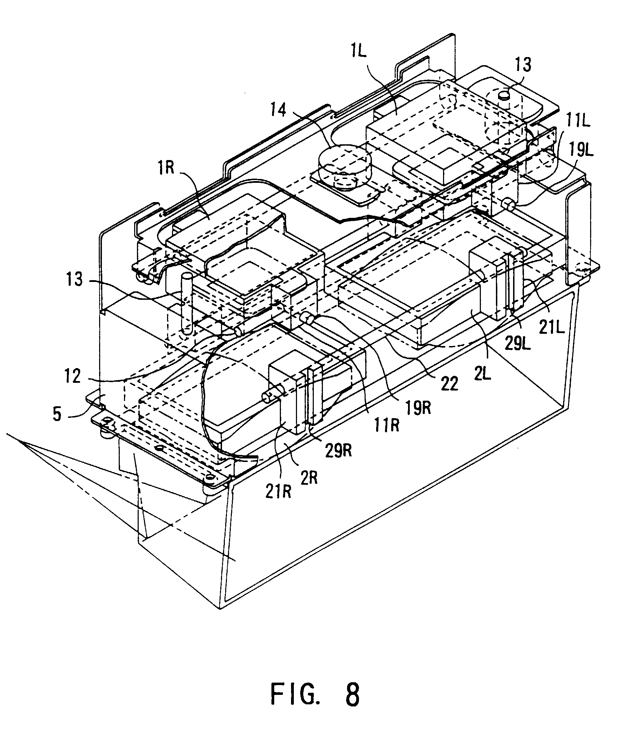

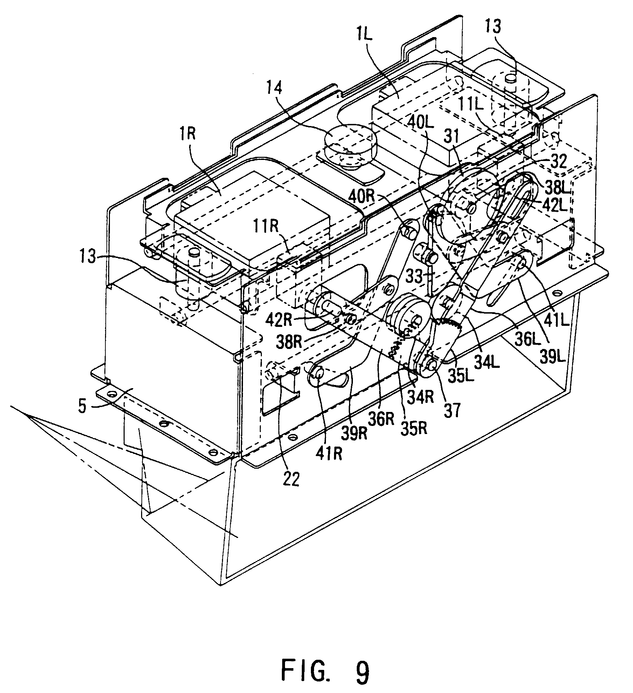

Fig. 6 generally shows an exterior of the glasses type display apparatus of this invention, Fig. 7 shows its optical system, Fig. 8 shows the arrangement of the mechanisms, and Fig. 9 illustrates an exterior of the mechanisms. In Figs. 6 to 9, the left and right lens systems 2L, 2R are respectively provided corresponding to left and right display portions 1L, 1R which are respectively combined with a back light and a liquid crystal display panel. Optical axes of these lens systems 2L, 2R are refracted by a beam splitter 3 with a slant of 45 [deg], and is entered to the user's left and right eyeballs. A liquid crystal shutter 4 is placed as an extinction means in front of the beam splitter 3.

The left and right display portions 1L, 1R, the left and right lens systems 2L, 2R, the beam splitter 3 and the liquid crystal shutter 4, are constructed in any enclosure 5. This enclosure 5, the inside of which is made of a material painted frosted black and intercepting light, is provided to a holder table 7 in front of a head fitting member 6. The user wearing this head fitting member 6 on his head can see a virtual image.

The left and right display portions 1L, 1R, and the left and right lens systems 2L, 2R are provided on the upper side of the holder table 7, and the beam splitter 3 and the liquid crystal shutter 4 are provided on the lower side of it. In Fig. 6, a case on the upper side of the holder table 7, and the outside portions of the glasses type display apparatus are omitted.

The left and right display portions 1L, 1R are fixed to linear sliders 11L and 11R as shown in Fig. 8. These linear sliders 11L and 11R are attached to a common slider shaft 12, so that the left and the right display portions 1L, 1R move left and right. Note that pins 19L and 19R connected to link mechanisms respectively are provided to the linear sliders 11L and 11R.

Further, the left and right display portions 1L, 1R, the linear sliders 11L and 11R and the slider shaft 12, are moved up or down as whole by the slider shaft 13. Note that a dial 14 for visibility adjustment is provided at the center of the left and right display portions 1L, 1R. This dial 14 has a screw structure and effects upward or downward movement on the left and right display portions 1L, 1R, the linear sliders 11L, 11R and the slider shaft 12 as a whole with respect to the enclosure 5.

The lens systems 2L and 2R are respectively fixed to the linear sliders 21L and 21R. These linear sliders 21L and 21R are attached to a common slider shaft 22, in order to move left or right the left and right lens systems 2L, 2R. The slider shaft 22 is fixed to the enclosure 5, and the left and right lens systems 2L, 2R, the linear sliders 21L and 21R and the slider shaft 22, are fixed unmovably as a whole in the up or down direction with respect to the enclosure 5. In the linear sliders 21L and 21R, vertical grooves 29L and 29R are connected to link mechanisms are respectively provided.

As shown in Fig. 6, a dial 31 for controlling a distance between pupils is located to the top of center of the enclosure 5. A rotation of a gear 32 which is placed at the same shaft of this dial 31, is transmitted to drive gears 34L and 34R via a semicircular gear 33. These drive gears 34L and 34R engage each other, so as to rotatably move in inverse direction. Segment gears 35L and 35R are respectively engaged with this drive gears 34L and 34R.

Further, the first slide arms 36L and 36R are provided to the segment gears 35L and 35R in one body. One end of this slide arms 36L and 36R is supported rotatably to a common rotary shaft 37. The center portion of this slide arms 36L and 36R are respectively linked to the center portion of the second slide arms 39L and 39R via joining plates 38L and 38R. Further, one end of these slide arms 39L and 39R is respectively supported rotatably to rotary shafts 40L and 40R.

Slide pins 41L and 41R are respectively provided to the other end of this slide arms 39L and 39R, and are inserted into vertical grooves 29L and 29R which are provided in the linear sliders 21L and 21R as shown in Fig. 8. Long holes 42L and 42R are provided to the other ends of the slide arms 36L and 36R by the base line, to insert pins 19L and 19R provided to the linear sliders 11L and 11R.

Accordingly, when the user dials the dial 31, the slide arms 36L and 36R are rotated, and then the slide arms 39L and 39R are rotated via the joining plates 38L and 38R. Consequently, the linear sliders 21L and 21R are moved symmetrically via the slide pins 41L and 41R, so as to adjust a distance between pupils.

When the user dials the dial 14, the display portions 1L, 1R, the linear sliders 11L, 11R and the slider shaft 12 are moved up or down as a whole with respect to the enclosure 5. Conversely, the lens systems 2L, 2R, the linear sliders 21L, 21R and the slider shaft 22 are fixed to the upper and lower portions of the enclosure 5, so that the left and right display portions 1L, 1R and the left and right lens systems 2L, 2R are displaced near to or apart from each other so that the visibility can be adjusted.

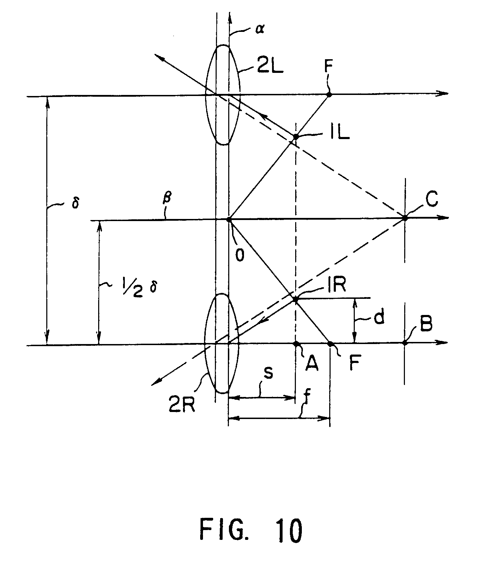

When the left and right display portions 1L, 1R move up or down, their positions move left or right along the long holes 42L, 42R of the other ends of the slide arms 36L, 36R. Further, the rotary shafts 37 of the slide arms 36L, 36R coincides with a center point O on a main point axis of the left and right lens systems 2L, 2R as shown in Fig. 10. Link mechanisms of the slide arms 36L and 36R, the joining plates 38L and 38R and the slide arms 39L and 39R, are formed, as a base line is passed on the focus F of the lens systems 2L, 2R.

Therefore, in this glasses type display apparatus, the left and right lens systems 2L, 2R move symmetrically according to the distance between pupils, and then the left and right display portions 1L, 1R move on segment lines OF through a center point O on the main point axis of the left and right lens systems 2L, 2R, and the focus F of the respective lens systems 2L and 2R.

Fig. 10 denotes an optical arrangement of the left and right display portions 1L, 1R, and the left and right lens systems 2L, 2R. Note that, a practical optical path is refracted by the beam splitter 3. However, in Fig. 10, the beam splitter 3 is omitted. In Fig. 10, for example, when placing a right display portion 1R at a point A, the center of a virtual image obtained as a result is formed at a point B on the optical axis of the right lens system 2R. In practice, in order to coincide with left and right virtual images, it is necessary to move the center of the virtual images at a point C. That is, if the distance between optical axes of the lens systems 2L and 2R are $\delta$, it may be moved by $\delta/2$.

If a distance between a center point A of the right display portion 1R and a main point axis $\alpha$ of the lens system 2R is "s", and if a distance between the main point axis $\alpha$ and the focus F is "f", the transversal magnification "m" of the virtual image is represented by the following equation:

$$m = \left| \frac{f}{s-f} \right| = \left| \frac{f}{f-s} \right| \qquad \dots (1)$$

Accordingly, if a necessary amount of movement of the right display portion 1R is "d", the virtual image moves by m x d. Therefore, the amount of movement "d" satisfies the following equation:

$$m \times d = \frac{\delta}{2} \qquad (2)$$

The equation (2) is represented by the following equation:

$$d = \frac{\delta}{2} - \frac{\delta}{2f} \times s \qquad (3)$$

In Fig. 10, there is the segment line FO between the focus F and the center point O on the main point axis $\alpha$ of the left and right lens systems 2L, 2R. This is similar to the left display portion 1L and the left lens system 2L.

In this glasses type display apparatus, the slider shafts 12 and 13 are provided to move the left and right display portions 1L, 1R along these segment lines FO, so that positions to see the left and right virtual images are coincided each other, even after changing the distance between the left and right display portions 1L, 1R, and the left and right lens systems 2L, 2R, by dialing the dial 31.

Further, if changing the distance between pupils by dialing the dial 31, the left and right lens systems 2L, 2R move symmetrically in the direction near to or part from the center point O along the main point axis $\alpha$. Therefore, the position of the focus F also moves in parallel with the main point axis $\alpha$. In this case, the base lines of the slide arms 36L and 36R are also rotated to pass on the focuses of respective lens systems 2L, 2R, so that positions of the left and right virtual images to be seen are coincided with a center axis $\beta$ which is orthogonal with the main point axis $\alpha$ and passes the center point O.

With the above construction, the glasses type display apparatus can be realized such that the distance between pupils can be adjusted, and positions of the left and right virtual images to be seen can be coincided each other, even after changing distances between the left and right display portions 1L, 1R, and the left and right lens systems 2L, 2R, by adjusting the distance between pupils, so that a virtual image can be seen properly by all users.

(1-2) Configuration of Pupil Distance Display Portion and Virtual Image Display Portion

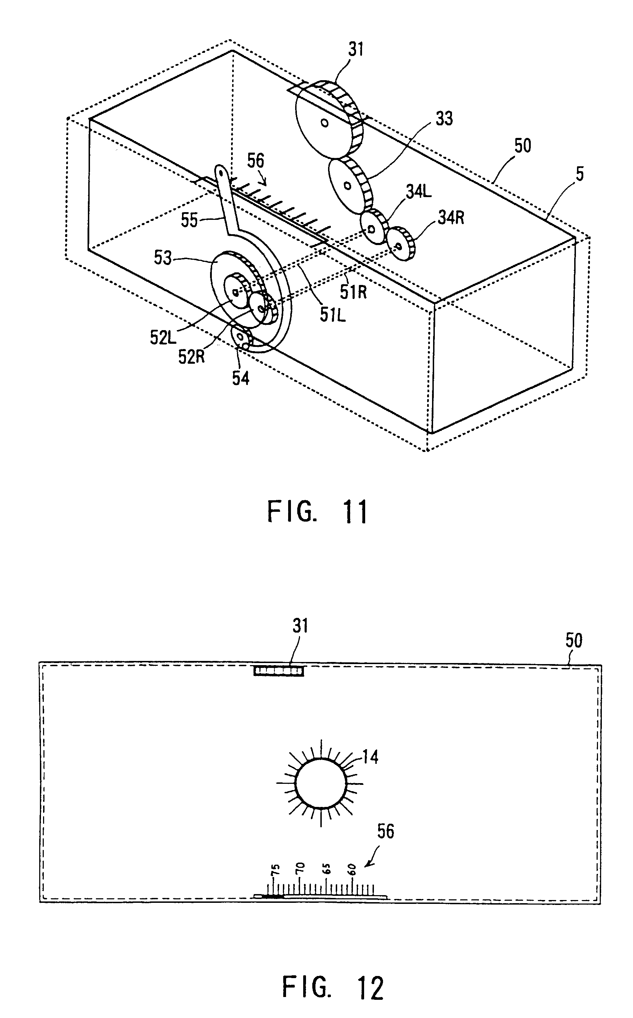

In the glasses type display apparatus of this embodiment, as shown in Figs. 11 to 13, when the distance between pupils is adjusted by rotating the dial 31 to adjust the distance between pupils, the adjusted distance between pupils can be displayed on a scale. In practice, as described above, when the dial 31 is rotated to adjust the distance between pupils, the semicircular gear 33 is rotated via the gear 32 fixed by the same axis, and thus this semicircular gear 33 and the drive gears 34L and 34R are rotated.

Drive gears 52L and 52R attached with a rear chassis of the enclosure 5 are driven by rotation of this drive gears 34L and 34R via shafts 51L and 51R. By rotation of this drive gears 52L and 52R, a segment gear 54 is rotated via a synchronization gear 53 fixed to one of drive gear 52L by same axis.

Corresponding to rotation of this semicircular gear 54, a scale indicating member 55 fixed to this segment gear 54 is moved to left or right. In practice, an end of the scale indicating member 55 projects slightly, from a long groove which is formed with the scale of distance between pupils 56 on the outside of the case 50, and moves to left or right by this long groove, so that the user can read the distance between pupils adjusted by rotation of the dial 31 for adjustment of the distance between pupils from the outside, for example, as numerical values 56 to 76 [mm].

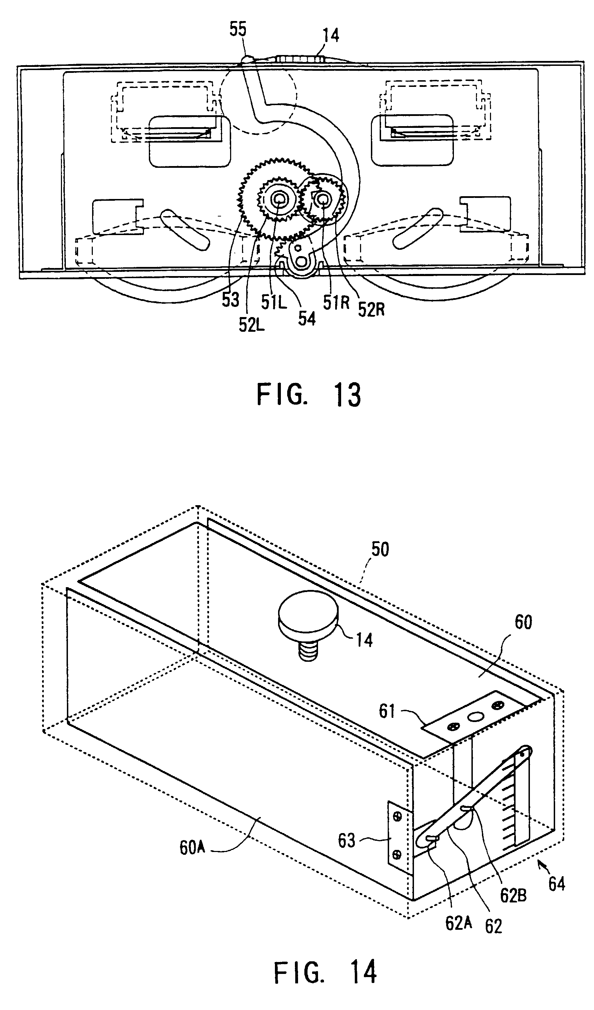

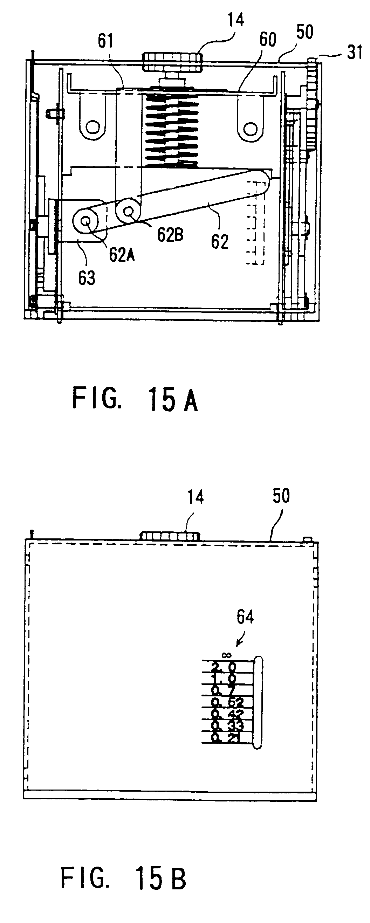

Further in the glasses type display apparatus of this embodiment, as shown in Figs. 14, 15A and 15B, when adjusting visibility by rotating the dial 14 for position adjustment of virtual image (that is visibility adjustment), the position of the virtual image corresponding to the adjusted visibility can be displayed on the scale of the virtual image display position. That is, when rotating the dial 14 for position adjustment of the virtual image, the distance between the left and right display portions 1L, 1R and the left and right lens systems 2L, 2R are changed, so that the positions of virtual images displayed in front of the user are changed.

When dialing the dial 14, an attach plate 60 of the left and right display portions 1L, 1R, and a scale side plate 61 attached by screws to this attach plate 60, are moved down. A virtual image position indicating plate 62 is connected to a center of scale member 63 and the scale side plate 61 respectively where it is attached to a rear chassis 60A by connecting units 62A and 62B, and it can be rotated.

When moving down the scale side board 61, the virtual image position indicating board 62 rotates at the same time around the center of scale member 63, thus the scale indicating board moves up or down. An end portion of this scale indicating board can be seen from the outside through a long groove formed on the outside of the case 50 with the scale of virtual image position 64, to magnify slight amount of adjustment of the dial 14 for position adjustment of virtual image by any time, so that the adjusted position of the virtual image can be easily read from the outside, for example, as numerical values 0.21 to ∞ [mm].

With the above construction, the distance between lenses adjusted is indicated on a scale to check from the outside, by interlocking with a mechanism through variable arrangements of the display portions 1L and 1R and the lens systems 2L and 2R corresponding to the distance between pupils, so that any user can be adjusted accurately with respect to the distance between pupils and a distance between optical axes and the lens systems 2L and 2R. Thus an image can be seen with little lens aberration and little distortion.

Further, with the above-described construction, by interlocking with a mechanism which can vary the position of the virtual image corresponding to the distance between the display portions 1L, 1R and the lens systems 2L, 2R, the set virtual image display position is indicated on a scale to check from the outside, so as to change the position of the virtual image. Therefore everyone can adjuste accurately to the position of the image that he wants to see.

Thus, it can be realized the glasses type display apparatus which the user's convenience can be improved in particular.

(1-3) Configuration of Head Fitting Member

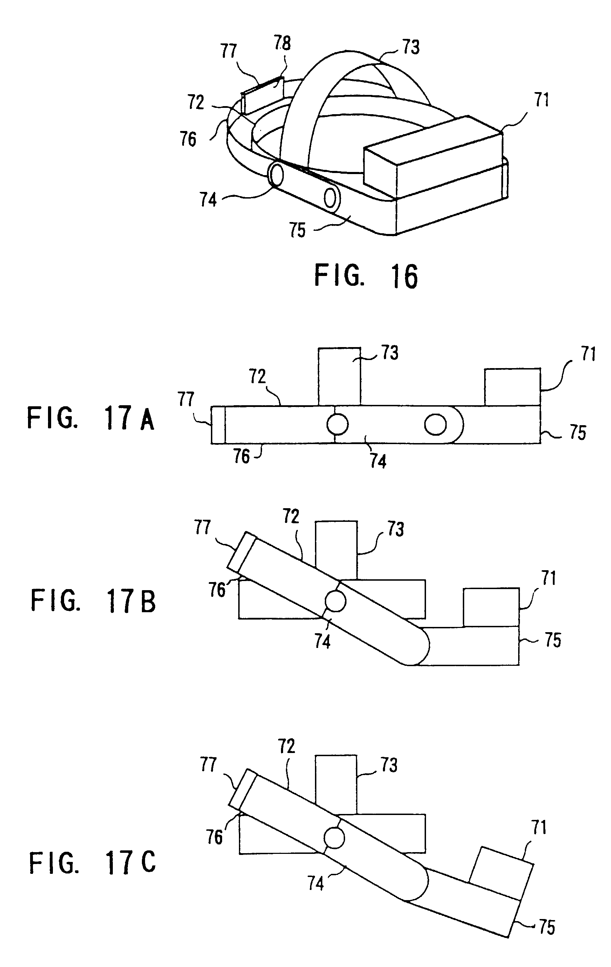

Fig. 16 shows a general configuration of head fitting member of the glasses type display apparatus of this invention, in which a weight balance portion is added to the configuration of Fig. 6. This glasses type display apparatus is consisted of an image display portion 71 described above with regard to Figs. 6 to 10, an image display portion support members 74 and 75, a head fitting members 72 and 73 and a weight balance portions 76, 77 and 78.

In this head fitting members 72 and 73, a periphery fixing band 72 fixes the glasses type display apparatus on the user's head, and its girth is variable to correspond to the size and the shape of the user's head. A weight supporting band 73 is so provided that the glasses type display apparatus does not fall.

Further, in the image display portion support members 74 and 75, a mechanism supporting arm 74 is placed at the temple of the head fitting member 72 and is connected to the latter rotatably for up or down movement. As shown in Fig. 17A, this mechanism supporting arm 74 can be sprung up so as not to obstruct when viewing the outside scene. Further, the image display portion supporting arm 75 is connected to the mechanism supporting arm 74 at the opposite side of the head fitting member 72.

As shown in Fig. 17B, the image display portion supporting arm 75 is rotatable up or down around the rotation center coincided with a central eyeball looking from the side direction. The image display portion 71 is constructed to move forward or backward. In practice, this mechanism supporting arm 74 is rotated to a position where the rotation center of the image display portion supporting arm 75 is brought up or down to coincide with the central eyeball. And then the image display portions supporting arm 75 is rotated, so that the image display apparatus 71 moves up or down around the eyeball as shown in Fig. 17C.

In this manner, by the mechanism supporting arm 74 and the image display portion supporting arm 75, the display position of the image can be rotated around the eyeball to keep a distance from the user's eyes to the image constant. Keeping the distance constant, images of the display portions 1L and 1R and the virtual image become orthogonal to the user's eyesight; therefore a distortion of shape of the image can be minimized. Further, the angle of the display portions can be easily set 0 to -30 [deg] to the horizontal face, this angle being sonsidered as the most suitable for seeing images; therefore the user's convenience can be improved.

The weight balance members 76, 77 and 78 consist of a weight arm 76, a balance weight 77 and a weight cover 78. This weight balance members 76, 77 and 78 are constructed to move together with the mechanism supporting arm 74.

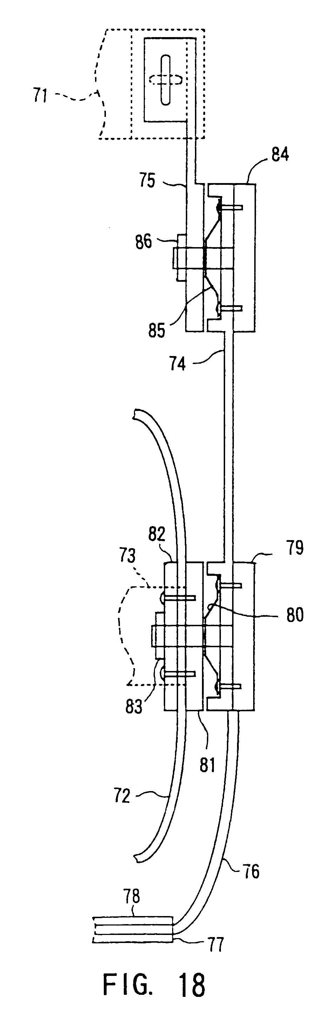

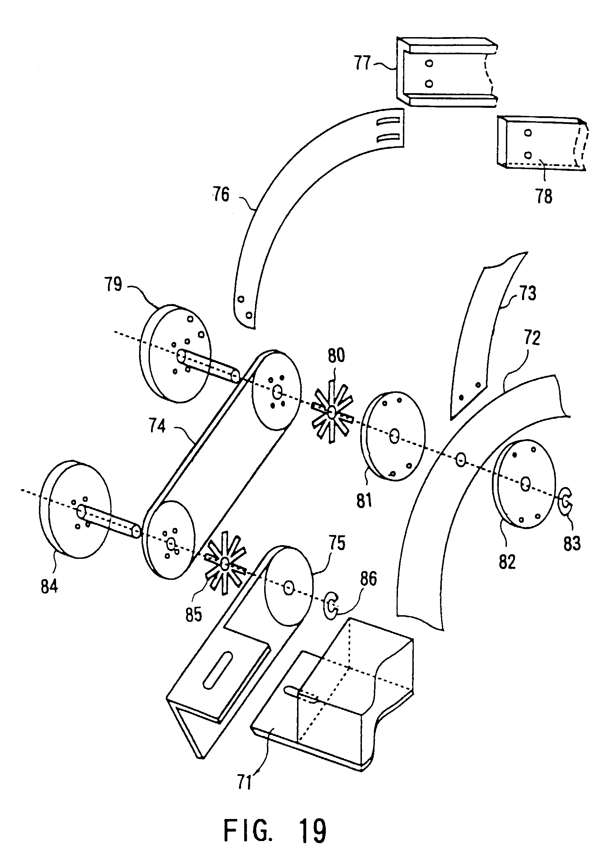

In the image display portion supporting members 74 and 75, the head fitting members 72 and 73 and the weight balance members 76, 77 and 78, as shown in Figs. 18 and 19, the peripheral fixing band 72 and the weight supporting band 73 are held by a band end receive 81 and a temple guard 82. A temple spring 80 is held between this portion and the system supporting arm 74, and is fixed by passing a temple shaft 79 and stopping them with a temple stopping ring 83.

In a portion at the center of the eyeball, an eyeball center spring 85 is held between the mechanism supporting arm 74 and a image portion supporting arm 75, and is passed by an eyeball center shaft 84 and an eyeball center stopping ring 86 stops the shaft. In a connecting portion of a image portion supporting arm 75 and an image display portion 71, long holes are respectively provided on arm 75 and portion 71, the long holes being connected by a screw to each other. Thereby, the image display portion 71 can be slide forward or backward, and left or right.

In the weight balance members 76, 77 and 78, the weight arm 76 is held by the balance weight 77 and the weight cover 78. The weight arm 76 has long holes, which allow the weight arm 76 to enlarge in length corresponding to the width of the user's head.

In the above construction, the image display portion is rotated around the center of an eyeball to allow viewing of a natural image without distortion, and the image display portion is moved forward or backward to be able to allow a viewer to wear it without taking off his glasses. The image display portion 71 and the image display portion supporting arm 75 can be sprung up to see easily the outside scene. Further, a weight corresponding to the weight of the image display portion and the girth of the user's head is provided, so as not to tire the wearer by balancing the burden imposed on his head. Thus, it can be realized that the glasses type display apparatus is also improved as concerns convenience.

(1-4) Other Embodiments

In the described above embodiments, the enclosure is consisted of sheet metals. However, instead of this, it may be constructed by resinous molding etc.. In this case, it may be realized similar to effects to the above embodiments. Further, in the above embodiments the slide arm is connected using drive gears. However, this invention is not only limited to this, and a timing belt or the like may be used instead.

Further in the described above embodiments, the dial for adjustment of visibility and for adjustment of a distance between pupils is moved with handle. This invention is not only limited to this, but also it may be automatically controlled by mounting drive motor. In addition in this case, in the glasses type display apparatus for seeing three-dimensional stereoscopic images etc., there may be also performed to feedback position data of the display portion, which is calculated as a position of the virtual image from image data.

Further, in the described above embodiments, as a display of the distance between pupils and a virtual image position, a scale is indicated by rotating the indicating board to read this. This invention is not only limited to this, but also the motion of the indicating board may be converted into the straight-line motion by using mechanism such as rack, pinion or the like. Rotary angles of a gear read by such rotary encoder may also be displayed on a display portion composed of such as liquid crystal. Further, movable portions, such as a link, of the adjustment mechanism may be used as a scale, to produce effects similar to these of the above embodiments.

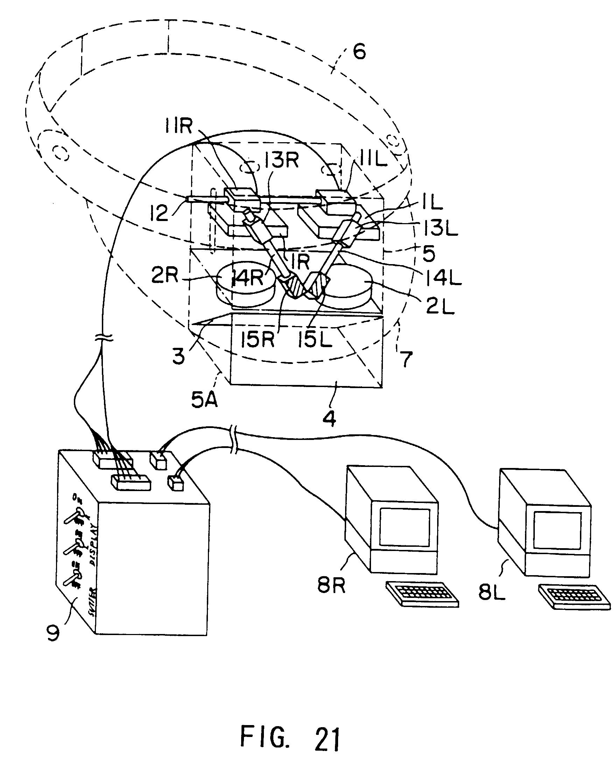

Further, in the above embodiments, the spring for connecting portion of the head fitting member is used. However, this invention is not only limited to this, and a coil spring may also be used, and a motor may be mounted instead of the spring. Further, as shown in Fig. 20, a helmet and a cap or the like may be used, instead of the band for head fitting.

Furthermore, in the above embodiments, this invention is applied to the glasses type display apparatus for virtual reality. However, this invention is not only limited to this, but also this invention may be suitable applied widely to various kinds of a display apparatus, such as a computer display apparatus or the like.

(1-5) As discussed above, with this invention, the glasses type display apparatus can be realized, in which an adjustment of distance between pupils and a visibility adjustment can be executed, and regardless of this adjustment, even if changing a distance between the left and right display portions and the lens systems, positions of the left and right virtual images can be coincided each other, so that every user can see clear images. Further, the virtual image display position corresponding to adjusted distance between pupils and visibility is indicated on a scale to check from the outside, so as to the user's convenience can be improved in particular.

Further, in the head fitting member, the image display portion is constructed to rotate by the temple and the central eyeball, so that the user can see the image at a natural position. The image display portion and a portion supporting it can be sprung up to avoid obstruction when looking outside the scene. Furthermore, a predetermined weight is provided on the rear side of head, so as to reduce the burden imposed on the user's head. Thereby, it can be realized the useful glasses type display apparatus by improving the user's convenience particularly.

(2) Second Embodiment

Fig. 21 shows a schematic view illustrating the construction of the second embodiment of the glasses type display apparatus of this invention. As shown in Fig. 21, the left and right lens systems 2L, 2R are provided corresponding to respective left and right display portions 1L, 1R. The optical axis of these lens systems 2L and 2R are reflected from the beam splitter 3 with a slant of 45 [deg] and enters left and right eyeballs (not shown) of the user. A liquid crystal shutter 4 is positioned in front of the beam splitter 3.

These left and right display portions 1L, 1R, left and right lens systems 2L, 2R, the beam splitter 3, and the liquid crystal shutter 4 are contained in any enclosure, such as the one 5 shown by broken lines. The enclosure 5 an inside wall of which is made of a material for painting in frosted black not to transmit light, adheres to the brim portion 7 of the head fitting member 6 at the face shown by a dotted chain lines. The user wears in this head fitting member 6 on his head, and can see virtual images.

The left and right image signals applied to each left and right display portions 1L, 1R, are generated by computers 8L and 8R, and these are provided to the left and right display portions 1L, 1R via a control equipment 9. Further, the control equipment 9 generates a control signal to open or close the liquid crystal shutter 4 according to the operation of the switches.

In this glasses type display apparatus, the left and right display portions 1L, 1R are respectively fixed to the first linear sliders 11L and 11R. These linear sliders 11L and 11R are secured to the first common slider shaft 12. The left and right display portions 1L and 1R are respectively fixed to the second linear sliders 13L and 13R. These second linear sliders 13L and 13R are respectively secured to the second and the third slider shafts 14L and 14R, and these slider shafts 14L and 14R are adhered, for example, by using an adhesive, with a predetermined angle to the enclosure 5 by fixed members 15L and 15R.

Consequently, when the first slider shaft 12 is moved up or down, the left and the right display portions 1L, 1R are neared to or parted from the left and the right lens systems 2L, 2R in order to adjust the visibility. In addition, the up or down movement of the first slider shaft 12 changes the display portions 1L and 1R in their positions on the slider shafts 14L and 14R nearing to and parting from the left and the right lens systems 2L, 2R.

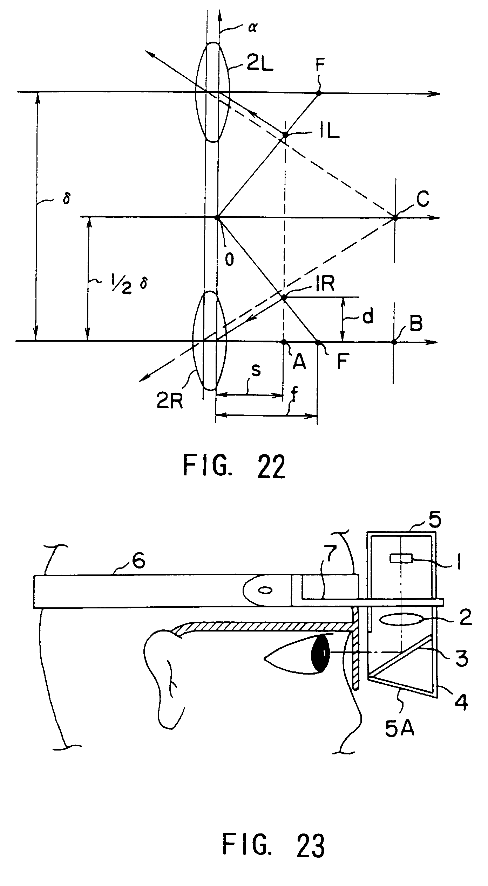

Fig. 21 depicts the optical arrangement of the left and the right display portions 1L, 1R and the left and right lens systems 2L, 2R. Fig. 22 fails to show the beam splitter 3. In Fig. 22, when the right display portion 1R is placed at a position A, a central point obtained as a result of the virtual image is formed at a point B on the optical axis of the lens system 2R. It is necessary to bring the central point of the virtual image to a point C in order to make the left and the right virtual images coincide with each other. That is, the central point moves by a distance of $\delta/2$ in case that the distance between the optical axis of the lens systems 2L and 2R is supposed $\delta$.

It is known that the following equation is obtained

$$m = |\frac{f}{s-f}| = |\frac{f}{f-s}| \tag{4}$$

Here, "m" means a transversal magnification of the virtual image, "s" means a distance between a central point A of the right display portion 1R and the main point shaft $\alpha$ of the lens system 2R, and "f" means a distance between the main point shaft $\alpha$ and the focus point F. As a result, presuming that the movement distance of the right display portion 1R concerned or to be moved is "d", it is said that the movement distance of the virtual image is m x d. Thereby, following equation is obtained

$$m \times d = \frac{\delta}{2} \tag{5}$$

The movement distance satisfying the equation (5) is represented as following equation:

$$d = \frac{\delta}{2} - \frac{\delta}{2f} \times s \tag{6}$$

"d" equals a segment of the line extending from the focus point F to the central point O on the main point shaft of the left and the right lens systems. The explanation above is applied also when the display portion 1L and the lens system 2L concern.

In the glasses type display apparatus of this embodiment, the second and the third slider shaft axes 14L and 14R are so positioned that the left and the right display portions 1L, 1R move along the segment line FO, it is possible to make the positions of the left and the right virtual images to be seen to coincide with each other even though visibility control changes the distance between the left and the right display portions, and the left and the right lens systems.

Further, in this glasses type display apparatus, the left and right display portions 1L, 1R and the left and right lens systems 2L, 2R are provided in the head fitting member 6, so that the left and right display portions 1L, 1R and lens systems 2L and 2R are fitted on a forehead of the user or above the left and the right eyes of the user. The beam splitter 3 slanted by about 45 [deg] relative to the optical axis of the left and the right lens systems, makes the optical axis refract, and the liquid crystal shutter 4 is placed in front of the beam splitter 3. Thereby, even though the glasses type display apparatus is fitted on the user, the user can see or observe instantly the outside field when the liquid crystal shutter 4 open. It is also made possible to watch the images of the display apparatus and simultaneously seeing any work of the outside of the display apparatus.

Further in this glasses type display apparatus, as shown in Fig. 23, the head fitting member 6 has a brim portion 7 and the beam splitter 3 placed below the brim portion 7 separated from the face of the user by a predetermined distance. Thereby, it is possible to firmly have a downward eyesight, and the user can freely take off and takes on a pair of glasses without taking off the glasses type display apparatus.

Further in this glasses type display apparatus, the bottom portion of the beam splitter 3 is covered with the bottom face 5A extending from the enclosure 5. Consequently, incident rays from the outside through the bottom of the beam splitter 3 can be prevented and unnecessary reflections on the left and the right display portions can be also prevented so as to improve the visibility virtual images. This bottom face 5A is placed to coincide with the viewing direction of the left and the right eyes of the user, so that a visibility of eyesight while seeing the outside by making the eyesight blocking range a minimum.

With the above construction, when the distance between the left and right display portions 1L, 1R, and the lens systems 2L and 2R change, it is possible to make the positions of the left and right virtual images to be seen coincide with each other. Thereby, it can be visibly adjusted certainly by simple constructions and the convenience of the glasses type display apparatus can be improved.

Further, with the above construction, it is possible to have a downward view with fitting on the device, and to see instantly the outside field by opening the liquid crystal shutter 4. Thereby, the user can be walked in the glasses type display apparatus, and can be seen in other display etc., while working. Also the user can freely take off and put on a pair of glasses without taking off the glasses type display apparatus.

(3) Third Embodiment

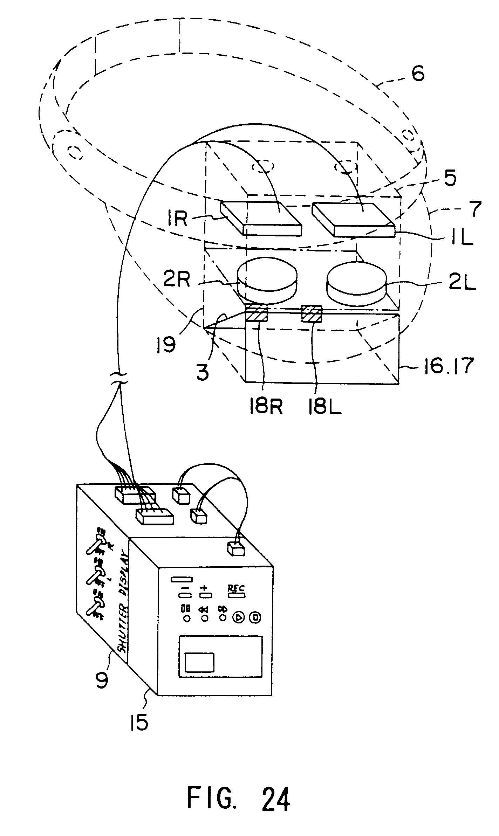

(3-1) Fig. 24 wherein corresponding portions with Fig. 21 are shown same reference numerals, depicts a schematic view of construction of the third embodiment of the glasses type display apparatus of this invention. Fig. 24 fails to show the linear sliders 11, 13L and 13R, the slider shafts 12, 14L and 14R, and visibility adjustment mechanism of Fig. 21.

In this glasses type display apparatus, a liquid crystal enclosure glass 16 and a polarization filter 17 are positioned at the position of the liquid crystal shutter 4 of Fig. 21. The left and right polarization filter 18L and 18R are positioned between the beam splitter 3 and the eyeballs by adhering to a transparent plastic board 19. In practice, the transparent plastic board 19 around thereof is fixed to adhere to the enclosure 5.

Further, a control equipment of this glasses type display apparatus, a video signal of which for example, a small video tape recorder 15 (hereinafter referred to as "small VTR 15") is provided in stead of computers 8L and 8R, so as to see video images. Further, the control equipment 9 and the small VTR 15 etc., are fixed to make one body, in order to carry, by fixing to the user's belt or hanging on his shoulder.

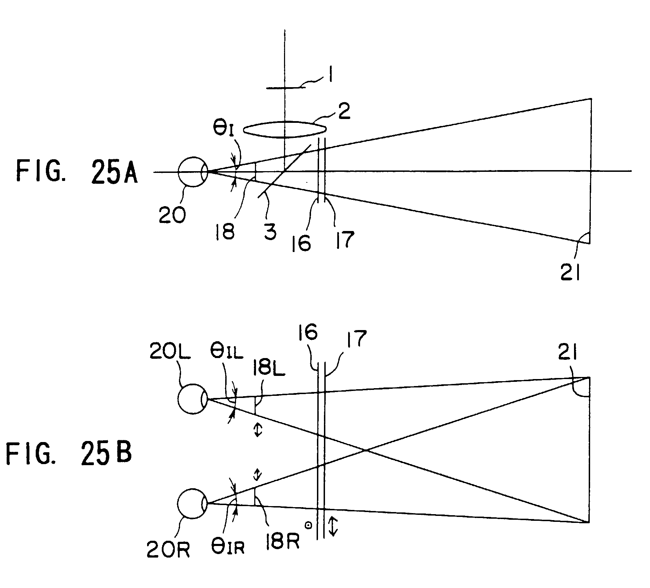

A section taken along the lens optical axis, and a section taken along a plane AA' depict respectively in Figs. 25A and 25B, as optical arrangements of which the left and the right display portions 1L, 1R, the left and right lens systems 2L, 2R, the left and the right polarization filters 18L, 18R, the liquid crystal enclosure glass 16 and the polarization filter 17, in the glasses type display apparatus.

In this glasses type display apparatus, wherein the left and the right display portions 1L, 1R consist of polarized light generating type display, a displayed image is magnified by convex lenses of the left and right lens systems 2L, 2R, and then reflects it by the beam splitter 3 to lead to eyeballs 20, so that a vertical image 21 of the left and the right display portions 1L, 1R are displayed in front of the eyeballs 20.

The liquid crystal shutter is constituted so as to provide the polarization filter 18 between the eyeballs 20 and the beam splitter 3, the liquid crystal enclosure glass 16 and the polarization filter 17 in front of the beam splitter 3. The size of the polarization filter 18 and its position are determined in an area of a visual field angle $\theta_l$ ($\theta_{IR}$, $\theta_{IL}$) of left and right eyeballs 20R, 20L respectively as seen from the vertical image 21. Thereby, it can be hidden only the outside in the area of visual field angle of the vertical images.

The polarization filters 18L and 18R are placed separately for the left and the right eyeballs 20L, 20R respectively, so that the outside of another eye is not hidden excessively. Polarization directions of the polarization filters 18L and 18R are made to coincide with each other, and the direction is made to coincide with a polarization direction of the display portion 1. Thereby, even though seeing the virtual image 21 through the polarization filters 18L and 18R, there is little extinction of the virtual image 21 by the polarization filters 18L and 18R.

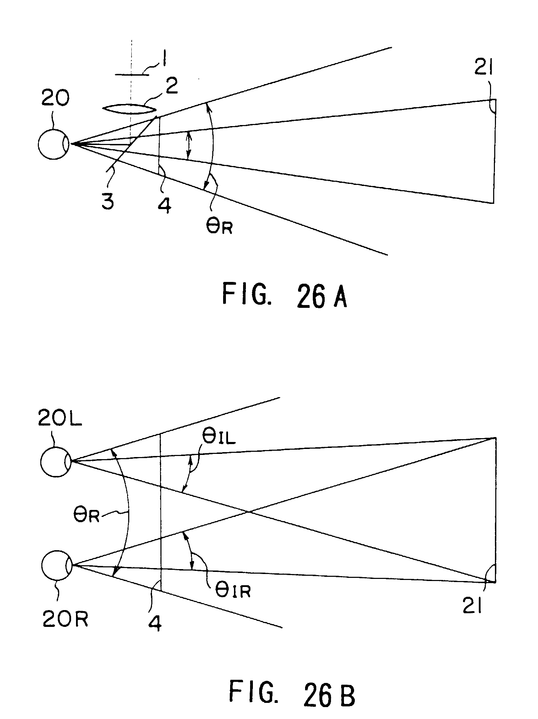

Figs. 26A and 26B depict a relation between an intercept area of the outside by the liquid crystal shutter 4 of the glasses type display apparatus and a visual field angle of the vertical image. In practice, in intercepting state of the liquid crystal shutter 4 as shown in Figs. 26A and 26B, the outside of front visual field is almost intercepted, thus it is being prohibited in working with taking information of the outside. On the contrary, in this second embodiment, it can be hidden only the outside of the displayed area of the virtual image 21, and thus it is possible to look around so that the virtual image 21 can be seen in the other working condition.

Further, even though the viewer sees the virtual image 21, in shutting the visual field of the outside, if moving his head, viewers often feel dizzy and feel sick owing to a loss of their sense of equilibrium. On the contrary, in this second embodiment, the visual field is not a space closed only the virtual image 21, so that even though moving his head, a disorder of the sense of equilibrium is not being generated.

With the above construction, the glasses type display apparatus can be endowed with visibility control achieves in a simple manner. In the glasses type display apparatus, only the outside of display area of the virtual image 21 is hidden by the crystal shutter consisted of the polarization filters 17, 18 and the liquid crystal enclosure glass 16 to look around. Thus, the virtual image 21 in other working situations can be seen, and even if the user moves his head, no disorder of the sense of equilibrium is generated.

(3-2) Other Embodiments

In the above third embodiment, the area hiding the outside is determined by the polarization filter 18 placed between eyeballs 20 and the beam splitter 3. However, the invention is not only limited to this embodiment, and the area hiding the outside field too may be set by the polarization filter 17' in front of the beam splitter 3 and the liquid crystal enclosure glass 16.

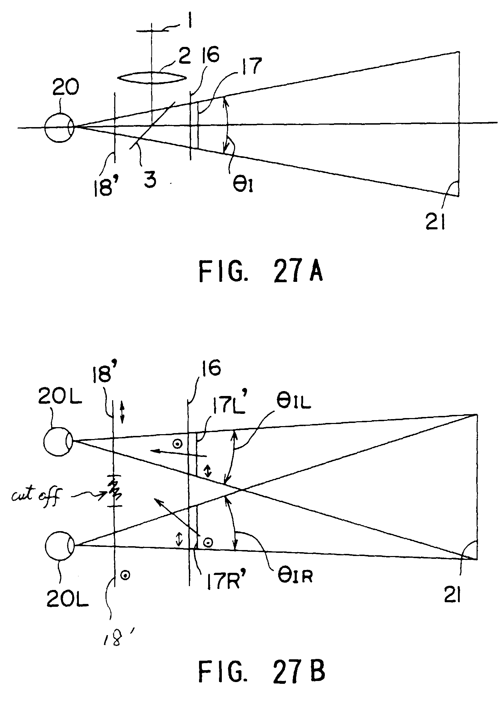

In this connection, as shown in Figs. 27A and 27B, in which the same reference numerals are denoted according to portions corresponding to Figs. 25A and 25B, a polarization filter 18' placed between eyeballs 20 and the beam splitter is enlarged satisfactorily, and the polarization filter 17' placed in front of the liquid crystal enclosure glass 16 is made as large as the display area of the vertical images. The polarization direction of the polarization filter 17' and a polarization direction after passing the liquid crystal enclosure glass 16, are set in parallel or vertical with respect to this drawing sheet.

The polarization directions of the left and the right display portions 1L, 1R are respectively coincided with the polarization directions of the left and the right polarization filter 17' (17L', 17R'), so that the light from the left and the right display portions 1L, 1R reach the left and right eyeballs 20L and 20R. By this construction, light passing to the left eyeball 20L, for example, will pass through the polarization filter 17L' in front of the left eyeball 20L, will not reached to the left eyeball 20L, so as to hide the outside field in the visual field area of the virtual image.

Conversely, light passing through the polarization filter 17R' in front of the right eyeball 20R will reach the left eyeball 20L. Therefore, only the outside of the virtual image area in front of the left eyeball 20L can be hidden, and likewise for the right eyeball 20R. Thereby, only the outside of the virtual area in front of the left and right eyeballs 20L, 20R can be hidden respectively.

Further in the above embodiments, this invention is applied to the glasses type display apparatus for virtual reality. However, this invention is not only limited to this, but also is applicable widely to kinds of display apparatus, for example, a computer etc..

(3-3) As described above, the glasses type display apparatus can be realized wherein, a visibility control can be performed specifically to coincide with left and right virtual images respectively, despite changing distances between the left and the right display portions and the lens systems. Further, it is possible to change glasses while using the display, and to obtain under visual field, so as to walk with the glasses type display apparatus, and see the other display or the like while working.

Further, only the outside of the display area of the virtual image is hidden by intercept means to look around, and thus user can see the virtual image while the other undertaking work. Furthermore, the present glasses type display apparatus does not give the user the impression of losing his sense of equilibrium, even when moving his head, and thus user's convenience can be improved.

**Claims**

1. A glasses type display apparatus for seeing a virtual image obtained through left and right lens systems (2L, 2R) which are respectively provided corresponding to left and right display portions (1L, 1R), said glasses type display apparatus comprising

   left and right slide mechanisms (13L, 13R, 14L, 14R) for moving said left and right display portions (1L, 1R) respectively, characterised in that said left and right display portions (1L, 1R) are moved by said left and right slide mechanisms (13L, 13R, 14L, 14R) along segment lines containing respectively center points (o) of said left and right lens systems (2L, 2R) located on a main point axis (a) of said left and right lens systems (2L, 2R) and focus points (f) of said left and right lens systems (2L, 2R) and in that said slide mechanisms (13L, 13R, 14L, 14R) are operative to adjust the distance (s) between on the one hand the left and the right display portion (1L, 1R) and on the other hand the left and right lens systems (2L, 2R) and to provide visibility adjustment, such that the positions of said left and right virtual images to be seen coincide with each other.

2. A glasses type display apparatus for seeing a virtual image obtained through left and right lens systems (2L, 2R) which are respectively provided corresponding to left and right display portions (1L, 1R), said glasses type display apparatus comprising

   a moving mechanism (19L, 19R; 42L, 42R) for moving symmetrically said left and right lens systems (2L, 2R) corresponding to a distance between eyeballs;

   characterised in that it further comprises

   left and right slide mechanisms (29L, 29R; 41L, 41R) for sliding said left and right display portions (1L, 1R) respectively along segment lines (Fo) containing center points (o) of the left and right lens systems (2L, 2R) located on a main point axis (a) of said left and right lens systems (2L, 2R) and focus points (F) of said left and right lens systems (2L, 2R); and
   a link mechanism (36L, 36R, 38L, 38R, 39L, 39R) linked to said moving mechanisms (19L, 19R; 42L, 42R) of said left and right lens systems (2L, 2R) for opening or closing symmetrically so that said left and right slide mechanisms (29L, 29R; 41L, 41R) respectively keep a relationship along said segment lines, wherein the left and the right display portions (1L, 1R) are respectively attached to said left and right slide mechanisms (29L, 29R; 41L, 41R) to be moved on said segment lines (Fo), so that said positions of virtual images to be seen are coincided with each other, regardless of said distance between eyeballs, even when the distance between said left and right display portions (1L, 1R) and said left and right lens systems (2L, 2R) is changed with visibility control.

3. A glasses type display apparatus according to claim 2, characterised in that it further comprises distance between eyeballs scale means (55, 56) for indicating said distance between eyeballs, corresponding to said symmetric motion of said left and right lens systems (2L, 2R).

4. A glasses type display apparatus according to claim 1 or 2, characterised in that it further comprises virtual image display position scale means (63) for indicating a display position of said virtual image, corresponding to said motion of the left and right display portions (1L, 1R), on a segment line (Fo) through a center point (o) of said left and right lens systems and a focus (F) of said left and right lens systems.

5. A glasses type display apparatus according to any one of claims 1 to 4, characterised in that further comprises head fitting means (72-76) for holding rotatably the image display portion (71) located at said left and right display portions (1L, 1R) and said left and right lens systems (2L, 2R), centered on an eyeball looking at the side of the user, and for holding movably said image display portion forward or backward.

6. A glasses type display apparatus according to claim 5, characterised in that said head fitting means (72-78) holds said image display portion and has means for springing up said display portion in the upper direction with respect to the eyes of the user.

7. A glasses type display apparatus according to claim 5 or 6, characterised in that said head fitting member (72-78) comprises a weight (76-78) at the rear of the head, corresponding to the weight of said image display portion (1L, 1R).

8. A glasses type display apparatus according to claim 1 or 2, characterised in that it further comprises

a head fitting member (72-78) for wearing said left and right display portions (1L, 1R) and said left and right lens systems (2L, 2R) above the eyes of the user:
a beam splitter (3) being located in front of eyes of said user with a predetermined slant with respect to optical axes of said left and right lens systems (1L, 1R); and
distinction means (18L, 18R) being located in front of said beam splitter.

## Patentansprüche

1. Brillenartiger Anzeigeapparat zum Sehen eines virtuellen Bildes, das durch ein mit einem linken und einem rechten Anzeigeabschnitt (1L, 1R) des Anzeigeapparats korrespondierendes linkes bzw. rechtes Linsensystem (2L, 2R) erhalten ist, mit:

   einem linken und einem rechten Verschiebemechanismus (13L, 13R, 14L, 14R) zum Bewegen des linken bzw. des rechten Anzeigeabschnitts (1L, 1R), dadurch gekennzeichnet, daß linker und rechter Anzeigeabschnitt (1L, 1R) durch den linken und den rechten Verschiebemechanismus (13L, 13R, 14L, 14R) längs Segmentlinien bewegt werden, die jeweils einen auf einer Hauptpunktachse ($\alpha$) des linken und des rechten Linsensystems (2L, 2R) liegenden Mittelpunkt (O) des linken und des rechten Linsensystems (2L, 2R) und einen Fokuspunkt (F) des linken und des rechten Linsensystems (2L, 2R) enthalten, und daß linker und rechter Verschiebemechanismus (13L, 13R, 14L, 14R) zum Einstellen des Abstandes (s) zwischen einerseits dem linken und rechten Anzeigeabschnitt (1L, 1R) und andererseits dem linken und rechten Linsensystem (2L, 2R) und zum Erzeugen einer Sicht derart wirken, daß die Positionen des linken und des rechten virtuellen Bildes in Koinzidenz miteinander zu sehen sind.

2. Brillenartiger Anzeigeapparat zum Sehen eines virtuellen Bildes, das durch ein mit einem linken und einem rechten Anzeigeabschnitt (1L, 1R) des Anzeigeapparats korrespondierendes linkes bzw. rechtes Linsensystem (2L, 2R) erhalten wird, mit:

   einem Bewegungsmechanismus (19L, 19R, 42L, 42R) zum symmetrischen Bewegen von linkem und rechtem Linsensystem (2L, 2R) in Korrespondenz mit einem Abstand zwischen Augäpfeln, gekennzeichnet durch einen linken und einem rechten Verschiebemechanismus (29L, 29R, 41L, 41R) zum Bewegen des linken bzw. des rechten Anzeigeabschnitts (1L, 1R) entlang Segmentlinien (FO), die jeweils einen auf einer Hauptpunktachse ($\alpha$) des linken und des rechten Linsensystems (2L, 2R) liegenden Mittelpunkt (O) des linken und des rechten Linsensystems (2L, 2R) und einen Fokuspunkt (F) des linken und des rechten Linsensystems (2L, 2R) enthalten, einen mit dem Bewegungsmechanismus (19L, 19R, 42L, 42R) des linken und des rechten Linsensystems (2L, 2R) verbundenen Verbindungsmechanismus (36L, 36R, 38L, 38R, 39L, 39R) zu einem derartigen symmetrischen Öffnen und/oder Schließen, daß linke und rechter Verschiebemechanismus (29L, 29R, 41L, 41R) entlang den Segmentlinien jeweils ein Verhältnis einhalten, wobei linker und rechter Anzeigeabschnitt (1L, 1R) an dem entlang den Segmentlinien zu bewegenden linken bzw. rechten Verschiebemechanismus (29L, 29R; 41L, 41R) derart angebracht sind, daß die Positionen zu sehender virtueller Bilder ungeachtet des Abstandes zwischen den Augäpfeln auch dann miteinander koinzidieren, wenn der Abstand zwischen dem linken und dem rechten Anzeigeabschnitt (1L, 1R) und dem linken und rechten Linsensystem (2L, 2R) bei einer Sichtkontrolle geändert wird.

3. Brillenartiger Anzeigeapparat nach Anspruch 2, dadurch gekennzeichnet, daß eine Augapfelabstandsmeßeinrichtung (55, 56) zum Abzeigen des Abstandes zwischen Augäpfeln in Korrespondenz mit der symmetrischen Bewegung des linken und des rechten Linsensystems (2L, 2R) vorhanden ist.

4. Brillenartiger Anzeigeapparat nach Anspruch 1 oder 2, dadurch gekennzeichnet, daß eine Virtuellbildpositionsmeßeinrichtung (63) zum Anzeigen einer Anzeigeposition des virtuellen Bildes in Korrespondenz mit der Bewegung des linken und des rechten Anzeigeabschnitts (1L, 1R) auf einer Segmentlinie (FO) durch einen Mittelpunkt (O) des linken und des rechten Linsensystems und einen Fokus (F) des linken und rechten Linsensystems vorhanden ist.

**5.** Brillenartiger Anzeigeapparat nach einem der Ansprüche 1 bis 4, dadurch gekennzeichnet, daß eine Kopfhalterungseinrichtung (72 - 76) zum drehbaren Halten eines Bildanzeigeabschnitts (71), der bei linkem und rechtem Anzeigeabschnitt (1L, 1R) und linkem und rechtem Linsensystem, das auf einen auf der Seite des Benutzers schauenden Augapfel zentriert ist, angeordnet ist, und zum vorwärts und/oder rückwärts bewegbaren Halten des Bildanzeigeabschnitts vorhanden ist.

**6.** Brillenartiger Anzeigeapparat nach Anspruch 5, dadurch gekennzeichnet, daß die Kopfhalterungseinrichtung (72 - 78) den Bildanzeigeabschnitts (71) hält und eine Einrichtung zum Aufspringenlassen des Anzeigeabschnitts in Richtung nach oben bezüglich der Augen des Benutzers aufweist.

**7.** Brillenartiger Anzeigeapparat nach Anspruch 5 oder 6, dadurch gekennzeichnet, daß die Kopfhalterungseinrichtung (72 - 78) auf der Rückseite des Kopfes ein Gewicht (76 - 78) aufweist, das dem Gewicht des Bildanzeigeabschnitts (71) entspricht.

**8.** Brillenartiger Anzeigeapparat nach Anspruch 1 oder 2, gekennzeichnet durch

eine Kopfhalterungseinrichtung (72 - 78) zum Tragen des linken und des rechten Anzeigeabschnitts (1L, 1R) und des linken und des rechten Linsensystems (2L, 2R) über den Augen des Benutzers,
einen Strahlteiler (3), der vor den Augen des Benutzers mit einer vorbestimmten Neigung bezüglich einer optischen Achse des linken und des rechten Linsensystems (2L, 2R) angeordnet ist, und
eine Unterscheidungseinrichtung (18L, 18R), die vor dem Strahlteiler angeordnet ist.


**Revendications**

**1.** Appareil d'affichage du type lunettes destiné à voir des images virtuelles obtenues au moyen de systèmes gauche et droit (2L, 2R) de lentilles qui sont disposés, respectivement, en correspondance avec des parties gauche et droite (1L, 1R) d'affichage, ledit appareil d'affichage du type lunettes comprenant :

des mécanismes gauche et droit (13L, 13R, 14L, 14R) à coulisse destinés, respectivement, à déplacer lesdites parties gauche et droite (1L, 1R) d'affichage, caractérisé en ce que lesdits mécanismes gauche et droit (13L, 13R, 14L, 14R) à coulisse déplacent lesdites parties gauche et droite (1L, 1R) d'affichage le long de segments contenant respectivement des points centraux (o) desdits systèmes gauche et droit (2L, 2R) de lentilles situés sur un axe de point principal (a) desdits systèmes gauche et droit (2L, 2R) de lentilles et des points focaux (f) desdits systèmes gauche et droit (2L, 2R) de lentilles, et en ce que lesdits mécanismes (13L, 13R, 14L, 14R) à coulisse servent à régler la distance entre, d'une part, les parties gauche et droite (1L, 1R) d'affichage et, d'autre part, les systèmes gauche et droit (2L, 2R) de lentilles et à procurer un réglage de visibilité, de façon telle que les positions desdites images virtuelles gauche et droite qui doivent être vues coïncident l'une avec l'autre.

**2.** Appareil d'affichage du type lunettes destiné à voir des images virtuelles obtenues au moyen de systèmes gauche et droit (2L, 2R) de lentilles qui sont, respectivement, disposés en correspondance avec des parties gauche et droite (1L, 1R) d'affichage, ledit dispositif d'affichage du type lunettes comprenant :

un mécanisme (19L, 19R ; 42L, 42R) de déplacement destiné à déplacer symétriquement lesdits systèmes gauche et droit (2L, 2R) de lentilles en correspondance avec une distance entre globes oculaires ;

caractérisé en ce qu'il comprend en outre :

des mécanismes gauche et droit (29L, 29R ; 41L, 41R) à coulisse destinés à faire coulisser lesdites parties gauche et droite (1L, 1R) d'affichage respectivement le long de segments (Fo) contenant des points centraux (o) de systèmes gauche et droit (2L, 2R) de lentilles situés sur un axe (a) de point principal desdits systèmes gauche et droit (2L, 2R) de lentilles et des points focaux (F) desdits systèmes gauche et droit (2L, 2R) de lentilles ; et
un mécanisme de biellette (36L, 36R, 38L, 38R, 39L, 39R), lié audit mécanisme de déplacement (19L, 19R ; 42L, 42R) desdits systèmes gauche et droit (2L, 2R) de lentilles, pour s'ouvrir ou se fermer symétriquement de façon que lesdits mécanismes gauche et droit (29L, 29R ; 41L, 41R) à coulisse conservent, respectivement, une relation le long desdits segments ;

EP 0 575 257 B1

les parties gauche et droite (1L, 1R) d'affichage étant fixées, respectivement, auxdits mécanismes gauche et droit (29L, 29R ; 41L, 41R) à coulisse pour se déplacer sur lesdits segments (Fo), de façon que les positions desdites images virtuelles qui doivent être vues coïncident l'une avec l'autre, quelle que soit ladite distance entre globes oculaires, même lorsque l'on change, à l'aide de la commande de visibilité, la distance entre lesdites parties gauche et droite (1L, 1R) d'affichage et lesdits systèmes gauche et droit (2L, 2R) de lentilles.

3. Appareil d'affichage du type lunettes selon la revendication 2, caractérisé en ce qu'il comprend en outre un moyen (55, 56) formant échelle de distance entre globes oculaires, destiné à indiquer ladite distance entre globes oculaires, correspondant audit mouvement symétrique desdits systèmes gauche et droit (2L, 2R) de lentilles.

4. Appareil d'affichage du type lunettes selon la revendication 1 ou 2, caractérisé en ce qu'il comprend en outre un moyen (63) formant échelle de position d'affichage d'image virtuelle destinée à indiquer une position d'affichage de ladite image virtuelle, correspondant audit déplacement des parties gauche et droite (1L, 1R) d'affichage, sur un segment (Fo) passant par un point central (o) desdits systèmes gauche et droit de lentilles et un foyer (F) desdits systèmes gauche et droit de lentilles.

5. Appareil d'affichage du type lunettes selon l'une quelconque des revendications 1 à 4, caractérisé en ce qu'il comprend en outre un moyen (72 à 76) de montage sur la tête, pour tenir de façon mobile en rotation la partie (71) d'affichage d'image, située au droit desdites parties gauche et droite (1L, 1R) d'affichage et desdits systèmes gauche et droit (2L, 2R) de lentilles, centrée sur un globe oculaire, vue depuis le côté de l'utilisateur, et pour tenir de façon mobile vers l'avant ou vers l'arrière ladite partie d'affichage d'image.

6. Appareil d'affichage du type lunettes selon la revendication 5, caractérisé en ce que ledit moyen (72 à 78) de montage sur la tête maintient ladite partie d'affichage d'image et comporte un moyen pour relever ladite partie d'affichage dans le sens vers le haut par rapport aux yeux de l'utilisateur.

7. Appareil d'affichage du type lunettes selon la revendication 5 ou 6, caractérisé en ce que ledit élément (72 à 78) de montage sur la tête comprend, à l'arrière de la tête, un poids (76 à 78) correspondant au poids de ladite partie (1L, 1R) d'affichage d'image.

8. Appareil d'affichage du type lunettes selon la revendication 1 ou 2, caractérisé en ce qu'il comprend en outre :

un élément (72 à 78) de montage sur la tête destiné à porter lesdites parties gauche et droite (1L, 1R) d'affichage et lesdits systèmes gauche et droit (2L, 2R) de lentilles au-dessus des yeux de l'utilisateur;
un diviseur de faisceau (3) étant situé devant les yeux dudit utilisateur avec une inclinaison prédéterminée par rapport aux axes optiques desdits systèmes gauche et droit (1L, 1R) de lentilles ; et
un moyen (18L, 18R) de distinction étant situé devant ledit diviseur de faisceau.

LEAST DISTANCE OF DISTINCT VISION

FIG. 1 (PRIOR ART)

FIG. 2(PRIOR ART)

FIG. 3(PRIOR ART)

FIG. 4 (PRIOR ART)

FIG. 20

FIG. 5A (PRIOR ART)

FIG. 5B (PRIOR ART)

EP 0 575 257 B1

FIG. 6

FIG. 7

FIG. 8

FIG. 9

EP 0 575 257 B1

FIG. 10

24

FIG. 11

FIG. 12

FIG. 13

FIG. 14

EP 0 575 257 B1

FIG. 15 A

FIG. 15 B

27

FIG. 16

FIG. 17 A

FIG. 17 B

FIG. 17 C

FIG. 18

FIG. 19

FIG. 21

FIG. 22

FIG. 23

FIG. 24

EP 0 575 257 B1

FIG. 25A

FIG. 25 B

34

FIG. 26 A

FIG. 26 B

FIG. 27A

FIG. 27B